# EUROPÄISCHE PATENTSCHRIFT

(11) **EP 0 879 647 B1**
(45) Veröffentlichungstag und Bekanntmachung des Hinweises auf die Patenterteilung: **16.08.2001**
(21) Anmeldenummer: 98108627.5
(22) Anmeldetag: 12.05.1998
(51) Int. Cl.: B05C 11/10, C09J 7/02, B65D 75/06

(54) **Verfahren und Einrichtung zum Herstellen von Haftklebstoffbändern**
Method and apparatus for manufacturing adhesive tapes
Procédé et appareil pour la fabrication de bandes adhésives

(30) Priorität: 16.05.1997 DE 19720705
(43) Veröffentlichungstag der Anmeldung: 25.11.1998
(73) Patentinhaber: BASF AKTIENGESELLSCHAFT, 67056 Ludwigshafen (DE)
(72) Erfinder: Meyer-Roscher, Bernd, Dr., 67363 Lustadt (DE); Mathauer, Klemens, Dr., 67061 Ludwigshafen (DE)
(74) Vertreter: Isenbruck, Günter, Dr.

(56) Entgegenhaltungen:
- EP-A- 0 699 586
- WO-A-92/02348
- WO-A-94/13451
- DE-A- 3 234 065
- PATENT ABSTRACTS OF JAPAN vol. 17, no. 103 (M-1374), 2. März 1993 & JP 04 294759 A (CEMEDINE CO LTD), 19. Oktober 1992
- DATABASE WPI Section Ch, Week 8629 Derwent Publications Ltd., London, GB; Class A18, AN 86-186107 XP002074884 & JP 61 118 482 A (NITTO ELECTRIC IND CO)

## Beschreibung

Die Erfindung betrifft ein Verfahren zum Herstellen von Haftklebstoffbändern sowie eine Einrichtung zur Durchführung dieses Verfahrens.

Aus der DE-A 36 06 199 ist ein Verfahren zum Auftragen eines Haftklebers aus einer flüssigkeitshaltigen Masse auf eine endlose, von einer Vorratsrolle abgezogene Papierbahn bekannt. Derartige Haftklebstoffe werden häufig in Gebinden, wie Fässern zur Verarbeitung befördert. Diese Fässer haben allerdings den großen Nachteil, daß sie sich meist nicht so entleeren lassen, daß keine Reste der ursprünglich darin enthaltenen Massen zurückbleiben, was zu einer unerwünschten Restverschmutzung führt. Insbesondere tritt dieser Effekt dann auf, wenn es sich bei den Haftklebstoffen um sehr zähflüssige Materialien handelt. Natürlich ist es möglich, die Gebinde wieder mit dem gleichen Material zu befüllen. Allerdings zeigt sich in der Praxis, daß zum Beispiel bei Haftklebstoffen lediglich zwei- bis dreimal das gleiche Gebinde befüllt werden kann. Danach wirken sich die Verunreinigungen des Fasses negativ auf die Produkteigenschaften aus. Die Folge ist, daß die verwendeten Gebinde entweder mit großem Aufwand gereinigt oder aber entsorgt werden müssen. Dies führt zu einem beträchtlichen Müllvolumen und hohen Kosten.

Eine Alternative für die erwähnten Fässer zur Beförderung der Haftklebstoffe stellen Schlauchhüllen dar. Am bekanntesten ist diese Transport- und Verkaufsform aus dem Bereich der Wursthüllen. Aus der DE-U 29 518 071 ist beispielsweise eine Vorrichtung zum portionsweisen Abfüllen von pastösem Füllgut, insbesondere zum Befüllen von Schlauchhüllen mit Wurstbrät bekannt, die zur Beförderung des Wurstbräts einen in einem Gehäuse angetriebenen Drehschieber als Förderorgan aufweist.

So unkomplizierter der Transport und die Handhabung derartig gefüllter Schläuche ist, um so schwieriger ist die Entleerung, insbesondere wenn der Schlauch mit einem Haftklebestoff gefüllt ist. Das Problem zeigt sich in analoger Weise an einer Zahnpastatube. Diese kann zwar durch Druck, der vom hinteren, verschlossenen Ende der Tube in Richtung auf die Öffnung ausgeübt wird, vollständig entleert werden. Je länger aber eine derartige Tube oder in konsequenter Fortführung ein derartiger Schlauch ist, um so weniger ist es möglich, durch Druckaufbau an dem einen Ende einen Produktaustrag am anderen Ende zu bewirken. Insbesondere bei Endlosschläuchen müßte der aufzubringende Druck so groß sein, daß jede Kunststoffolie dadurch zerplatzen würde. Infolgedessen ist die Verwendung von Endlosschläuchen bei der Herstellung von Haftklebstoffbändern nicht sehr verbreitet.

Bei der Herstellung von Etiketten durch Aufbringen von Haftklebstoffen werden die Haftklebstoffkomponenten in der Regel in Vorratstanks gehalten und bei der Verarbeitung in einen Mischbehälter dosiert, aus dem der fertige Haftklebstoff auf die Etiketten aufgetragen wird. Eine entsprechende automatisierte Mischküche ist in der BASF-Broschüre mit dem Titel "Perspektiven für die Verarbeitung von Dispersionshaftklebstoffen" von J. Türk, H. Fietzek, H. Hesser und I. Voges beschrieben. Es handelt sich um einen Sonderdruck eines Vortrags, gehalten auf dem Finat Seminar in Neuss, 1992. Er ist zudem in Adhäsion 10/1993, Seiten 17 bis 20 veröffentlicht.

Aufgabe der vorliegenden Erfindung ist es, ein Verfahren zum Herstellen von Haftklebstoffbändern bereitzustellen, das derartig ausgestaltet ist, daß ein Einsatz von mit den Haftklebstoffen befüllten Schläuchen möglich ist. Insbesondere soll das Verfahren unter Einsatz einer entsprechenden Einrichtung so durchgeführt werden können, daß eine kontinuierliche und weitgehend vollständige Entleerung der Schläuche möglich ist.

Diese Aufgabe wird gelöst durch ein Verfahren zum Herstellen von Haftklebstoffbändern, umfassend die Schritte, daß
- ein Schlauchband aus einer mit einer Haftklebstoffmasse gefüllten Schlauchhülle in eine Einrichtung, umfassend eine rohrförmige Vorrichtung, eingespannt,
- das Schlauchband durch die rohrförmige Vorrichtung unter längsseitigem Öffnen der Schlauchhülle zu einem Band hindurchgeführt,
- das Band so von der Haftklebstoffmasse abgetrennt wird, daß ein Teil der Haftklebstoffmasse als Schicht auf dem Band verbleibt,
- die abgetrennte Haftklebstoffmasse die Einrichtung über eine Austragsöffnung verläßt und
- das von der Haftklebstoffmasse abgetrennte Band mit der darauf verbliebenen Haftklebstoffschicht als Haftklebstoffband aufgewickelt wird.

Zur Lösung der Aufgabe wird des weiteren eine Einrichtung zur Durchführung des Verfahrens bereitgestellt, die eine rohrförmige Vorrichtung mit mindestens drei Öffnungen sowie eine Aufwickelvorrichtung umfaßt, wobei die rohrförmige Vorrichtung mindestens eine Aufnahmeöffnung zur Aufnahme von Schlauchbändern, mindestens eine Austragöffnung für die Haftklebstoffmasse und mindestens eine weitere Öffnung mit einer Umlenkeinrichtung sowie zwischen der mindestens einen Aufnahmeöffnung und der mindestens einen weiteren Öffnung eine oder mehrere, bevorzugt zwei, Aufschlitzvorrichtungen aufweist.

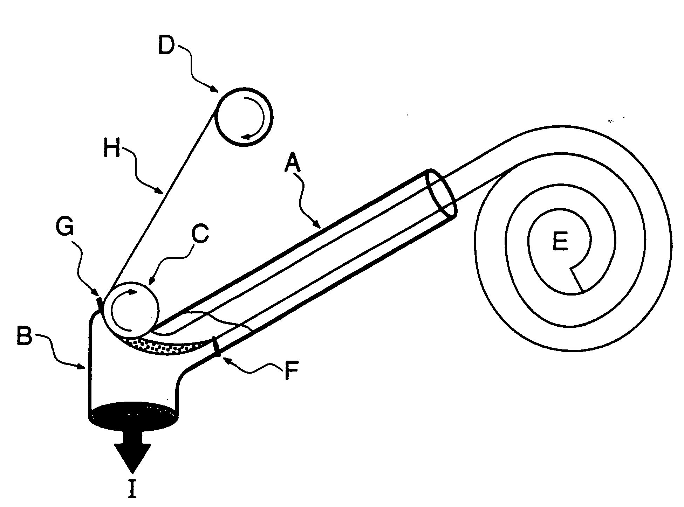

Unter der weiteren Öffnung der rohrförmigen Vorrichtung ist dabei eine Öffnung zu verstehen, die in der Lage bezüglich der - nicht notwendigerweise geraden - Verbindungslinie zwischen den Mittelpunkten der beiden übrigen Öffnungen nach außen beziehungsweise seitlich versetzt ist. Diese Öffnung weist also nicht notwendigerweise zur Seite, sondern kann auch, ausgehend von der rohrförmigen Vorrichtung, nach oben oder unten, also in beliebige Raumrichtungen, weisen, wie nachfolgend anhand der Zeichnung noch näher erläutert wird; gleichwohl wird diese weitere Öffnung im folgenden auch als "seitliche Öffnung" bezeichnet.

Bei dem erfindungsgemäßen Verfahren wird zur Aufnahme der Schlauchbänder eine rohrförmige Vorrichtung eingesetzt, deren Durchmesser so dimensioniert ist, daß er mindestens so groß ist wie derjenige des aufzunehmenden Schlauchbandes. Der Durchmesser der rohrförmigen Vorrichtung - nachfolgend auch als "Rohr" bezeichnet, auch wenn dies nicht notwendigerweise bedeutet, daß es sich dabei um ein gerades Rohr mit gleichmäßig rundem Querschnitt handelt - ist um mindestens so viel größer als derjenige des aufzunehmenden Schlauchbandes, daß das Schlauchband mit einem Kraftaufwand durch die rohrförmige Vorrichtung geführt werden kann, der unterhalb des Grenzwertes liegt, der zum Platzen der Schlauchhülle beim Hindurchführen des Schlauchbandes durch die rohrförmige Vorrichtung führt. Andererseits soll das Verhältnis aus Durchmesser zu Länge der rohrförmigen Vorrichtung so dimensioniert sein, daß sich der beim Entleeren der gefüllten Schlauchhülle aufbauende Druck über die Länge des Rohrs abzubauen vermag. Insbesondere sollen Durchmesser und Länge der rohrförmigen Vorrichtung so dimensioniert sein, daß ein Massenrückstau in der Schlauchhülle verhindert wird. Die genauen Zahlenwerte dafür in absoluten Maßeinheiten anzugeben ist unmöglich, da dies auch von der Art der in der Schlauchhülle befindlichen pastösen Haftklebstoffmasse abhängt. Außerdem hängen diese Werte im einzelnen auch von der konstruktiven Ausgestaltung der für das erfindungsgemäße Verfahren verwendeten Vorrichtung ab. Beispielsweise wird bei einem zur Aufnahme der Schlauchbänder senkrecht angeordneten Rohr der Wert für den minimalen oder den maximalen Durchmesser anders ausfallen, als wenn das Rohr beziehungsweise die rohrförmige Vorrichtung in Schräglage oder gar wegen leichterer Befüllbarkeit waagerecht angeordnet ist. Die jeweiligen Werte für die gewünschten Durchmesser können jedoch vom Fachmann leicht - unter Umständen mittels weniger Probeversuche - ermittelt werden.

Das Öffnen des Schlauchbandes erfolgt bei dem erfindungsgemäßen Verfahren durch mindestens eine Aufschlitzvorrichtung, insbesondere mindestens eine klingen-, dorn- oder schneiderollenartigen Vorrichtung, die zwischen der Aufnahmeöffnung und der seitlichen Öffnung des Rohres angebracht ist. Es können beispielsweise zwei Aufschlitzvorrichtungen, die einander gegenüberstehen, angebracht sein. In diesem Falle wird die Schlauchhülle beim Öffnen des Schlauchbandes in zwei Hälften zerlegt. Diese können dann auch über zwei gegenüberstehende seitliche Öffnungen der Vorrichtung als ebene Bänder, Filme oder Folien (im folgenden als "Bänder" zusammengefaßt) entnommen werden. Eine derartige Ausführungsform ist insofern bevorzugt, als das Entleeren der gefüllten Schlauchhüllen und damit das Herstellen der Haftklebstoffbänder weniger störanfällig abläuft.

Das Band selbst wird in der rohrförmigen Vorrichtung von der Haftklebstoffmasse an einer weiteren Öffnung, in der Regel der mindestens einen seitlichen Öffnung abgetrennt. Dazu können in der seitlichen Öffnung mindestens ein Schlitz, mindestens eine Ausdrückeinrichtung und/oder mindestens eine Abschälvorrichtung vorhanden sein. Die Ausdrückeinrichtung unterstützt das Abtrennen der Haftklebstoffmasse von der längsseitig geöffneten Schlauchhülle. Sie dient zugleich der Umlenkung und wird deshalb auch als Umlenkeinrichtung bezeichnet. Wegen der Konsistenz der Haftklebstoffmasse wird dazu bevorzugt zusätzlich eine Abschälvorrichtung, die an der seitlichen Öffnung befindlich ist, eingesetzt. Bei der Abschälvorrichtung kann es sich um eine gegebenenfalls verstellbare separate Vorrichtung, wie eine Abschälklinge, handeln. Bevorzugterweise ist die Abschälklinge in bezug auf ihren Abstand von dem Band verstellbar. Bei der Abschälvorrichtung kann es sich auch um den entsprechend konstruktiv modifizierten Rand der seitlichen Öffnung handeln. Sofern es die Konsistenz der Haftklebstoffmasse ermöglicht, kann es sich bei der seitlichen Öffnung in einem bevorzugten Falle um einen Schlitz handeln. Der Schlitz erleichtert es, daß die geöffnete Schlauchhülle die rohrförmige Vorrichtung bereits als Band verlassen kann. Wird die Schlauchhülle bei Abtrennung der Haftklebstoffmasse derartig über die Ausdrückeinrichtung und durch die seitliche Öffnung, etwa durch einen Schlitz geführt, so erhält man ein Band, das zur Konfektionierung anschließend aufgewickelt werden kann. Die Aufwickelrolle enthält danach in komprimierter Form die Schlauchhülle, die auf einer Seite eine Haftklebstoffschicht aufweist.

Bevorzugt werden mindestens zwei gegenüberstehende seitliche Öffnungen vorgesehen. Natürlich enthält in diesem Falle jede der weiteren Öffnungen eine Umlenkeinrichtung zum leichteren Aufwickeln beziehungsweise Aufrollen der Haftklebstoffbänder.

Bei der Einrichtung zur Durchführung des erfindungsgemäßen Verfahrens kann außerdem ein Teil der rohrförmigen Vorrichtung im Bereich zwischen Aufschlitzvorrichtung und Abschälvorrichtung ein mantelbeheiztes Rohr oder Gehäuse umfassen. Dies ermöglicht eine Temperaturkontrolle des Haftklebstoffs und somit beispielsweise auch die Beeinflussung seiner Konsistenz, wie etwa der Zähigkeit. Somit ist auch auf diese Weise in gewissem Umfang eine Steuerung des Verfahrens möglich. Außerdem kann zu diesem Zweck auch die Klinge selbst beheizt sein.

Das Öffnen der Schlauchhüllen und Trennen der so erhaltenen Bänder aus der Schlauchhülle von der Haftklebstoffmasse erfolgt in der Regel bei Temperaturen von 0 bis 140, vorzugsweise von 20 bis 120°C. Dabei wird, wie beschrieben, der gefüllte Schlauch durch geeignete Vorrichtungen auf die gewünschte Temperatur erwärmt. Die Hauptmenge der Haftklebstoffmasse, die aus der Vorrichtung ausgeschleust wird, kann für die üblichen Anwendungen eingesetzt werden. Sie kann beispielsweise in Vorratstanks gelangen, aus denen sie zur Beschichtung von beispielsweise Etiketten oder Papierbahnen entnommen wird.

Nach dem Öffnen der gefüllten Schläuche in der erfindungsgemäßen Vorrichtung wird das aus der Schlauchhülle erhaltene Band, das eine Schicht der Haftklebstoffmasse enthält, ausgetragen und aufgewickelt. Dabei können beispielsweise Förderbänder von Pagendarm eingesetzt werde. Vor dem eigentlichen Aufwickeln erfolgt dabei im Falle von UV-vernetzbaren Haftklebstoffen die UV-Bestrahlung. Dazu können übliche UV-Bestrahlungseinrichtungen verwendet werden, wie sie beispielsweise von IST, Nürtingen (DE) oder Fusion, Gaithersburg (USA) hergestellt werden.

So läßt sich mit Hilfe der erfindungsgemäßen Vorrichtung beziehungsweise des erfindungsgemäßen Verfahrens auf einfache Weise ein Haftklebstoffband, ähnlich einer Tesabandrolle, herstellen. In dem Spezialfall der Verpackung von UV-vernetzbaren Haftklebstoffen in Schläuchen und der Entleerung derselben mit Hilfe der beschriebenen Einrichtung läßt sich vorteilhafterweise eine UV-Bestrahlungseinheit vor der Aufwickelvorrichtung installieren. Diese UV-Einheit sorgt für die Einstellung der haftklebstofftypischen Eigenschaften, insbesondere für die Erhöhung des Molekulargewichts, vor der Anfertigung der Klebebandrolle.

### Haftklebstoffmassen

Erfindungsgemäß können in den Schlauchhüllen alle geeigneten Haftklebstoffmassen eingesetzt werden. Sie sind vorzugsweise lösungsmittelarm oder lösungsmittelfrei. Es kann sich beispielsweise um Haftklebstoffmassen auf der Basis von Polyacrylaten, Silikonen, Epoxidharzen oder Polyurethanen handeln. Auch Hot-melt Systeme, die unter Feuchtigkeitseinfluß aushärten, sind einsetzbar. In der Regel handelt es sich um flexible Feststoffe in Art einer Polymerschmelze, wobei die Glasübergangstemperatur des Polymers unterhalb der Raumtemperatur (25°C) liegt. Geeignete Haftklebstoffmassen sind beispielsweise in EP-A-0 377 199, US 4,737,559, US 4,847,137 und dem Artikel "UV-Vernetzbare Acrylat-Schmelzhaftklebstoffe" von G. Auchter, J. Barwich, G. Rehmer und H. Jäger, Adhäsion, Kleben und Dichten, 37, 1 bis 2/93, Seiten 14 bis 20 beschrieben.

Vorzugsweise handelt es sich dabei um relativ niedermolekulare Verbindungen, die UV-vernetzbar sind. Sie werden in den Haftklebstoffmassen zunächst als niedermolekulare Verbindungen eingesetzt, die eine geringe Viskosität beziehungsweise eine niedrige Glasübergangstemperatur aufweisen. Nach dem Auftragen auf die Bänder werden sie mit UV-Licht behandelt und vernetzt, wobei höhermolekulare Haftklebstoffmassen entstehen, die die gewünschten Haftklebstoffeigenschaften aufweisen. Vorzugsweise wird dabei die noch nicht vernetzte Haftklebstoffmasse auf das Band aufgebracht und nach dem Aufbringen vor dem Aufwickeln mit UV-Licht bestrahlt und vernetzt. Es können dabei alle geeigneten UV-Vernetzer oder UV-Initiatoren eingesetzt werden. Sie sind beispielsweise in dem vorstehend zitierten Artikel aus Adhäsion beschrieben, ferner in EP-A-0 377 191, US 4,737,559 und US 4,847,137.

Vorzugsweise weisen die Haftklebstoffmassen UV-Vernetzer auf der Basis von Benzophenoneinheiten auf.

### Schlauchhülle

Die Schlauchhülle kann aus allen geeigneten Materialien bestehen. Vorzugsweise besteht sie aus Polymermaterialien, wie Polyamiden, Polypropylen, Polyethylen, Copolymeren oder Polyestern. Es können dabei die üblicherweise für Haftklebefilme verwendeten Trägermaterialien als Hüllen eingesetzt werden. Beispiele geeigneter Schlauchhüllenmaterialien sind orientiertes Polypropylen (OPP) und Polyethylenterephthalat.

Die Dicke der Trägerschicht, das heißt des Bandes, richtet sich nach den gewünschten Endanwendungen beziehungsweise nach der für den Transport der gefüllten Schläuche benötigten Stärke. Üblicherweise beträgt die Dicke 10 *µ*m bis 1 mm. Die Dicke der Haftklebstoffmassenschicht beträgt vorzugsweise 5 bis 300 *µ*m. Beim Einsatz von UV-vernetzbaren Haftklebstoffmassen beträgt die Dicke vorzugsweise maximal 150 *µ*m.

Das erfindungsgemäße Verfahren sowie die erfindungsgemäße Einrichtung werden anhand eines Beispiels durch die beigefügte Zeichnung näher erläutert:
Der gefüllte Schlauch (hier als aufgewickelte Spirale (E) gezeichnet) wird zunächst durch ein Rohr (A) geführt. Kurz vor der Austragsöffnung oder Entleerungsstelle (B), die in diesem Beispiel in Form eines nach unten offenen Gehäuses oder Rohrs ausgebildet ist, ist ein Dorn oder ein Messer (F) von unten in das Führungsrohr (A) eingelassen. Mit Hilfe dieses Dorns (F) wird der Schlauch, der darüber hinweg gezogen wird, der Länge nach aufgeschlitzt.

Weiterhin hat das Rohr (A) die Aufgabe, einen Produktrückstau in Richtung der Schlauchspirale (E) zu verhindern. Dies geschieht, indem das Rohr (A) so dimensioniert ist, daß es relativ eng um den Schlauch herum verläuft, aber noch genug Spielraum läßt, damit der Schlauch ohne zu großen Widerstand hindurchgezogen werden kann. Weiterhin muß die Länge des Rohres (A) so bemessen sein, daß der sich durch die Entleerung aufbauende Druck sich nicht in einer Entspannung am Rohrende abbauen kann, was mit einer Aufweitung oder einem Platzen des Schlauches einherginge.

Nachdem der Schlauch durch den Dorn aufgeschlitzt ist, wird die Schlauchfolie so um die Umlenkrolle (C) geführt, daß sie auf der Aufwickelrolle (D) aufgewickelt werden kann. Hierbei wird mit Hilfe einer Abschälklinge (G), deren Abstand zu der Umlenkrolle (C) variabel ist, der Teil der Haftklebstoffmasse abgeschält, der als Hauptmenge (I) aufgrund der Viskosität und Schwerkraft von alleine in Richtung Entleerungsstelle (Austragsöffnung) (B) strömt. Durch die Einstellung der Abschälklinge (G) wird die Dicke der Haftkleb-Stoffschicht auf dem Band (H) bestimmt.

## Patentansprüche

1. Verfahren zum Herstellen von Haftklebstoffbändern, umfassend die Schritte, daß
- ein Schlauchband aus einer mit einer Haftklebstoffmasse gefüllten Schlauchhülle in eine Einrichtung, umfassend eine rohrförmige Vorrichtung, eingespannt,
- das Schlauchband durch die rohrförmige Vorrichtung unter längsseitigem Öffnen der Schlauchhülle zu einem Band (H) hindurchgeführt,
- das Band (H) so von der Haftklebstoffmasse abgetrennt wird, daß ein Teil der Haftklebstoffmasse als Schicht auf dem Band (H) verbleibt,
- die abgetrennte Haftklebstoffmasse die Einrichtung über eine Austragöffnung verläßt und
- das von der Haftklebstoffmasse abgetrennte Band mit der darauf verbliebenen Haftklebstoffschicht als Haftklebstoffband aufgewickelt wird.

2. Verfahren nach Anspruch 1, daß eines oder mehrere der folgenden Merkmale aufweist:
- die rohrförmige Vorrichtung weist einen Durchmesser auf, der so dimensioniert ist, daß er mindestens so groß ist wie derjenige des aufzunehmenden Schlauchbandes, mit der Maßgabe, daß er um so viel größer ist als derjenige des aufzunehmenden Schlauchbandes, daß das Schlauchband mit einem Kraftaufwand durch die rohrförmige Vorrichtung geführt werden kann, der unterhalb des Grenzwertes liegt, der zum Platzen der Schlauchhülle beim Hindurchführen des Schlauchbandes durch die rohrförmige Vorrichtung führt;
- das Verhältnis aus Durchmesser zu Länge der rohrförmigen Vorrichtung ist so dimensioniert, daß sich der beim Entleeren der gefüllten Schlauchhülle aufbauende Druck über die Länge des Rohrs abzubauen vermag;
- das Öffnen des Schlauchbandes zu einem Band erfolgt durch mindestens eine, insbesondere klingen-, schneiderollen- oder dornartige Aufschlitzvorrichtung;
- das Band wird nach dem Abtrennen von der Haftklebstoffmasse über eine Umlenkeinrichtung und anschließend über eine Aufwickelvorrichtung aufgewickelt.

3. Verfahren nach Anspruch 1 oder 2, wobei die Abtrennung des Bandes von der Haftklebstoffmasse in der rohrförmigen Vorrichtung an mindestens einer weiteren Öffnung, insbesondere einem Schlitz einer Ausdrückeinrichtung und/oder einer Abschäleinrichtung erfolgt.

4. Verfahren nach Anspruch 3, wobei die Dicke der Haftklebstoffschicht mittels der Abschäleinrichtung eingestellt wird.

5. Verfahren nach einem der Ansprüche 1 bis 4, wobei es sich bei der Haftklebstoffmasse um eine UV-Haftklebstoffmasse handelt und das Band nach dem Abtrennen von der Haftklebstoffmasse vor dem Aufwickeln mit UV-Licht bestrahlt wird.

6. Verfahren nach einem der Ansprüche 1 bis 5, wobei das Schlauchband in der rohrförmigen Vorrichtung vor, bei oder unmittelbar nach dem längsseitigen Öffnen der Schlauchhülle zu einem Band aufgeheizt oder abgekühlt wird.

7. Einrichtung zur Durchführung des Verfahrens nach einem der Ansprüche 1 bis 6, umfassend eine rohrförmige Vorrichtung mit mindestens 3 Öffnungen sowie eine Aufwickelvorrichtung, wobei die rohrförmige Vorrichtung mindestens eine Aufnahmeöffnung zur Aufnahme von Schlauchbändern, mindestens eine Austragöffnung für die Haftklebstoffmasse und mindestens eine weitere Öffnung mit einer Umlenkeinrichtung sowie zwischen der mindestens einen Aufnahmeöffnung und der mindestens einen weiteren Öffnung eine oder mehrere, bevorzugt 2, Aufschlitzvorrichtungen aufweist.

8. Einrichtung nach Anspruch 7, die eines oder mehrere der folgenden Merkmale aufweist:
- die rohrförmige Vorrichtung ist so dimensioniert, daß ihr Durchmesser mindestens so groß ist wie derjenige des aufzunehmenden Schlauchbandes, mit der Maßgabe, daß er um so viel größer ist als derjenige des Schlauchbandes, daß das Schlauchband mit einem Kraftaufwand durch die rohrförmige Vorrichtung geführt werden kann, der unterhalb des Grenzwertes liegt, der zum Platzen der Schlauchhülle beim Hindurchführen des Schlauchbandes durch die rohrförmige Vorrichtung führt;
- das Verhältnis aus Durchmesser zu Länge der rohrförmigen Vorrichtung ist so dimensioniert, daß sich der beim Entleeren der gefüllten Schlauchhülle aufbauende Druck über die Länge des Rohrs abzubauen vermag;
- der Teil der rohrförmigen Vorrichtung zwischen Aufschlitzvorrichtung(en) und weiterer Öffnung umfaßt ein mantelbeheiztes Rohr oder Gehäuse;
- es ist zusätzlich eine UV-Bestrahlungsvorrichtung vor der Aufwickelvorrichtung installiert.

## Claims

1. A process for producing pressure-sensitive adhesive tapes which comprises the steps of
- clamping a tube strip of a tube skin filled with a pressure-sensitive adhesive composition into an apparatus comprising a tubular appliance,
- passing the tube strip through the tubular appliance while opening the tube skin longitudinally, to form a tape (H),
- separating the tape (H) from the pressure-sensitive adhesive composition in such a way that some of the pressure-sensitive adhesive composition remains as a film on the tape (H),
- causing the separated pressure-sensitive adhesive composition to exit the apparatus by way of a discharge aperture, and
- winding up the tape separated from the pressure-sensitive adhesive composition, with the pressure-sensitive adhesive film that has remained thereon, as a pressure-sensitive adhesive tape.

2. A process as claimed in claim 1 which has one or more of the following features:
- the tubular appliance has a diameter which is such that it is at least as large as that of the tube strip that is to be received, with the proviso that it is greater than that of the tube strip to be received to the extent where the tube strip can be guided through the tubular appliance with a force which is below the limit value which causes the tube skin to burst when the tube strip is passed through the tubular appliance;
- the ratio of diameter to length of the tubular appliance is such that the pressure which builds up when the filled tube skin is emptied is able to dissipate over the length of the pipe of the appliance;
- the opening of the tube strip to form a tape is effected by means of at least one slitting appliance which in particular is bladelike, cutting-rollerlike or spikelike;
- following separation from the pressure-sensitive adhesive composition, the tape is wound up by way of a deflection device and subsequently by way of a winding device.

3. A process as claimed in claim 1 or 2, where, within the tubular appliance, the separation of the tape from the pressure-sensitive adhesive composition takes place at at least one further aperture, in particular a slot, at least one expulsion unit and/or at least one peeling unit.

4. A process as claimed in claim 3, where the thickness of the film of pressure-sensitive adhesive is established by means of the peeling unit.

5. A process as claimed in any of claims 1 to 4, where the pressure-sensitive adhesive composition is a UV pressure-sensitive adhesive composition and the tape is irradiated with UV light following separation from the pressure-sensitive adhesive composition, but before winding.

6. A process as claimed in any of claims 1 to 5, where the tube strip in the tubular appliance is heated or cooled before, during or immediately after the opening of the tube skin longitudinally to form a strip.

7. An apparatus for implementing a process as claimed in any of claims 1 to 6, comprising a tubular appliance, having at least 3 apertures, and a winding device, the tubular appliance having at least one receiving aperture for receiving tube strips, at least one discharge aperture for the pressure-sensitive adhesive composition and at least one further aperture having a deflection device, and, between the (at least one) receiving aperture and the (at least one) further aperture, one or more, preferably 2, slitting appliances.

8. An apparatus as claimed in claim 7 which has one or more of the following features:
- the tubular appliance has a diameter which is such that it is at least as large as that of the tube strip that is to be received, with the proviso that it is greater than that of the tube strip by an amount such that the tube strip can be guided through the tubular appliance with a force which is below the limit value which causes the tube skin to burst when the tube strip is passed through the tubular appliance;
- the ratio of diameter to length of the tubular appliance is such that the pressure which builds up when the filled tube skin is emptied is able to dissipate over the length of the pipe of the appliance;
- that part of the tubular appliance between the slitting appliance(s) and further aperture comprises a jacket-heated pipe or housing;
- additionally, a UV irradiation unit is installed upstream of the winding device.

## Revendications

1. Procédé de fabrication de bandes adhésives, comprenant les étapes selon lesquelles
- une bande souple en forme de tuyau, constituée d'une enveloppe tubulaire remplie d'une masse de matière adhésive est entrée dans un appareil comportant un dispositif tubulaire,
- la bande souple en forme de tuyau est passée à travers le dispositif tubulaire en ouvrant longitudinalement l'enveloppe tubulaire pour former une bande (H),
- la bande (H) est isolée de la masse de matière adhésive de façon qu'une partie de la masse de matière adhésive subsiste sur la bande (H) sous la forme d'une couche,
- la masse de matière adhésive isolée quitte l'appareil par l'intermédiaire d'une ouverture de sortie, et
- la bande isolée de la masse de matière adhésive et présentant la couche de matière adhésive subsistant sur elle est enroulée sous la forme d'une bande adhésive.

2. Procédé suivant la revendication 1, caractérisé en ce qu'il présente une ou plusieurs des particularités suivantes :
- le dispositif tubulaire présente un diamètre qui est dimensionné de façon qu'il soit au moins aussi grand que celui de la bande souple en forme de tuyau à recevoir, à la condition qu'il soit suffisamment plus grand que celui de la bande souple en forme de tuyau à recevoir pour que celle-ci puisse être guidée à travers le dispositif tubulaire avec une dépense d'énergie qui soit inférieure à la valeur limite qui provoque une crevaison de l'enveloppe tubulaire lors du passage de la bande souple en forme de tuyau à travers le dispositif tubulaire,
- le rapport entre le diamètre et la longueur du dispositif tubulaire est dimensionné de façon que la pression qui se constitue lors du vidage de l'enveloppe tubulaire remplie soit capable de se dégrader sur la longueur du tuyau,
- l'ouverture de la bande souple en forme de tuyau pour former une bande s'effectue par au moins un dispositif de fendage, en particulier du type à lames, à rouleaux de coupe ou à mandrin,
- la bande est, après l'isolement de la masse de matière adhésive, enroulée sur un dispositif de renvoi et ensuite sur un dispositif d'enroulement.

3. Procédé suivant l'une des revendications 1 et 2, dans lequel l'isolement de la bande par rapport à la masse de matière adhésive s'effectue dans le dispositif tubulaire à au moins une autre ouverture, en particulier à une fente d'un dispositif d'éjection et/ou d'un dispositif à peler.

4. Procédé suivant la revendication 3, dans lequel l'épaisseur de la couche de matière adhésive est ajustée au moyen du dispositif à peler.

5. Procédé suivant l'une des revendications 1 à 4, dans lequel, en ce qui concerne la masse de matière adhésive, il s'agit d'une masse de matière adhésive U.V. et la bande est, après l'isolement par rapport à la masse de matière adhésive, irradiée par de la lumière U.V. avant l'enroulement.

6. Procédé suivant l'une des revendications 1 à 5, dans lequel la bande souple en forme de tuyau est chauffée ou refroidie dans le dispositif tubulaire avant, lors ou immédiatement après l'ouverture longitudinale de l'enveloppe tubulaire pour former une bande.

7. Appareil pour la mise en oeuvre du procédé suivant l'une des revendications 1 à 6, comprenant un dispositif tubulaire présentant au moins trois ouvertures ainsi qu'un dispositif d'enroulement, le dispositif tubulaire présentant au moins une ouverture de réception pour recevoir des bandes souples en forme de tuyau, au moins une ouverture de sortie pour la masse de matière adhésive et au moins une autre ouverture avec un dispositif de renvoi ainsi qu'entre ladite au moins une ouverture de réception et ladite au moins une autre ouverture, un ou plusieurs dispositifs de fendage, de préférence deux.

8. Appareil suivant la revendication 7, qui présente une ou plusieurs des particularités suivantes :
- le dispositif tubulaire est dimensionné de façon que son diamètre soit au moins aussi grand que celui de la bande souple en forme de tuyau à recevoir, à la condition qu'il soit suffisamment plus grand que celui de la bande souple en forme de tuyau pour que celle-ci puisse être guidée à travers le dispositif tubulaire avec une dépense d'énergie qui soit inférieure à la valeur limite qui provoque une crevaison de l'enveloppe tubulaire lors du passage de la bande souple en forme de tuyau à travers le dispositif tubulaire,
- le rapport entre le diamètre et la longueur du dispositif tubulaire est dimensionné de façon que la pression qui se constitue lors du vidage de l'enveloppe tubulaire remplie soit capable de se dégrader sur la longueur du tuyau,
- la partie du dispositif tubulaire située entre le ou les dispositifs de fendage et l'autre ouverture comporte un tuyau ou boîtier chauffé par une chemise,
- un dispositif d'irradiation aux U.V. est installé en supplément avant le dispositif d'enroulement.
